Europäisches Patentamt

European Patent Office

Office européen des brevets

(11) Veröffentlichungsnummer: **0 263 479 B1**

(12) **EUROPÄISCHE PATENTSCHRIFT**

(45) Veröffentlichungstag der Patentschrift: **03.07.91**

(51) Int. Cl.⁵: **F02M 25/02, B04C 5/08**

(21) Anmeldenummer: **87114548.8**

(22) Anmeldetag: **06.10.87**

(54) **Vorrichtung zum Einführen von Wasserdampf in den Ansaugweg einer Brennkraftmaschine.**

(30) Priorität: **06.10.86 DE 3633949**

(43) Veröffentlichungstag der Anmeldung:
**13.04.88 Patentblatt 88/15**

(45) Bekanntmachung des Hinweises auf die
Patenterteilung:
**03.07.91 Patentblatt 91/27**

(84) Benannte Vertragsstaaten:
**ES FR GB IT SE**

(56) Entgegenhaltungen:
**EP-A- 0 009 779**
**US-A- 4 078 527**
**US-A- 4 270 508**
**US-A- 4 326 862**
**US-A- 4 430 964**

(73) Patentinhaber: **Lohberg, Hans-Martin**
**Elsener Str. 15**
**W-4790 Paderborn(DE)**

(72) Erfinder: **Lohberg, Hans-Martin**
**Elsener Str. 15**
**W-4790 Paderborn(DE)**

(74) Vertreter: **Hanewinkel, Lorenz, Dipl.-Phys.**
**Patentanwalt Ferrariweg 17a**
**W-4790 Paderborn(DE)**

**Beschreibung**

Die Erfindung betrifft eine Vorrichtung, bei der Wasserdampf aus einem Verdampfer über eine Dampfleitung in den Ansaugweg einer Brennkraftmaschine geführt wird.

Aus DE-PS 28 43 335.4 ist eine Vorrichtung bekannt, bei der Wasser über eine Dosierpumpe einem Verdampfer zugeführt wird und der entstehende Wasserdampf gesteuert vor und hinter der Drosselklappe in den Ansaugweg einer Brennkraftmaschine geführt und dort dem Kraftstoff-Luftgemisch zugemischt wird. Bei dieser bekannten Vorrichtung ist es erforderlich, destiliertes oder rückstandfrei verdampfendes und gefiltertes Wasser zu verwenden, da sich sonst die relativ engen Dampf-Zuführwege, die insbes. stromab der Drosselklappe liegen, mit mitgerissenen Rückständen verstopfen und sich außerdem betriebsstörende Ablagerungen an den Enlaßventilen bilden können. Darüberhinaus erfordert die vorbekannte Vorrichtung eine Steuervorrichtung und zugehörige Steuerventile in der Wasserzuleitung zum Verdampfer, damit sichergestellt wird, daß kein unverdampftes Wasser und keine Wassertröpfchen in den Ansaugweg gelangen.

Es ist Aufgabe der Erfindung, eine Vorrichtung der genannten Art zu offenbaren, bei der ungefiltertes Wasser oder Leitungswasser dem Verdampfer zugeführt werden kann, wobei das Eintreten von Ablagerungen und Wassertröpfchen in den Ansaugweg und dessen Verstopfen verhindert wird, ohne daß in der Wasserzuführung Steuer- und Ventilvorrichtungen dafür erforderlich sind.

Die Lösung der Erfindung besteht darin, daß in der Dampfleitung ein Zyklon angeordnet ist, dessen tangentialer Eingangsstutzen mit dem Verdampfer verbunden ist und dessen achsialer, obenseitiger Ausgangsstutzen mit dem Ansaugweg verbunden ist und an dessen unterseitigem Entsorgungsstutzen über ein Unterdruckventil eine Entsorgungsleitung angeschlossen ist.

Vorteilhafte Ausgestaltungen sind in den Unteransprüchen angegeben.

Es ist vorteilhaft, daß eine Entsorgung der Ausscheidungen, wie dies bei Filtern notwendig wäre, entfällt.

Weiterhin entfällt vorteilhaft eine besondere Dampfüberdrucksicherung, aus der, z. B. bei Vereisung der Düsen bei noch kaltem Motor oder bei momentanem Lastwechsel anfallender vom Motor nicht abgenommener Dampf entweichen könnte.

In den Figuren 1-3 sind Einzelheiten der Vorrichtung dargestellt.

Fig. 1     zeigt eine Gesamtvorrichtung zur Wasserdampfzuführung schematisch - unterschiedlicher Maßstab der Bauteile - teilweise geschnitten.

Fig. 2     zeigt ein Zyklon in Seitenansicht;

Fig. 3     zeigt ein Zyklon in Aufsicht.

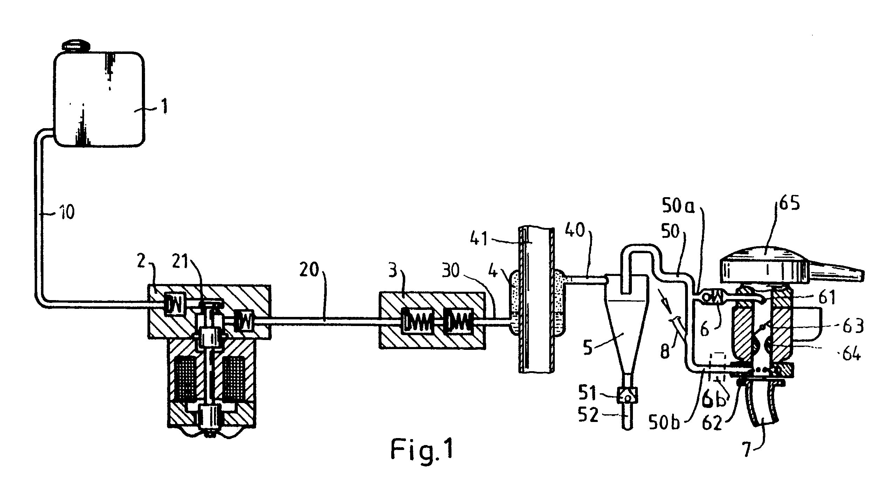

Die Figur 1 zeigt einen Wassertank (1), von dem eine Wasserzuleitung (10) zu einer lastabhängig steuerbaren Dosierpumpe (2) führt, die das Wasser über die Leitungen (20, 30), in die einen Wärmerücklauf verhindernde Ventile (3) eingeschaltet sind, in einen Verdampfer (4) fördert, der das Abgasrohr (41) der Brennkraftmaschine umgibt. Obenseitig ist an dem Verdampfer (4) eine Dampfauslaßleitung (40), die zweckmäßig ein Kunststoffschlauch ist, angeschlossen, die zu einem Zyklon (5) führt, an dem sie mit einem tangentialen Stutzen angeschlossen ist. Aus dem Zyklon ist zentral nach oben eine Dampfleitung (50) für den gereinigten Dampf herausgeführt, der dem Ansaugweg (7) durch Düsen (61. 62) vor bzw. hinter der Drosselklappe (63) und der Vergaserdüsenanordnung (64) zugeführt wird.

Aus dem unteren, verjüngten Ende des Zyklons (5) ist über ein Entsorgungs-Ventil (51) ggf. eine Entsorgungsleitung (52) angeschlossen. Das Entsorgungsventil (51) schließt bei Unterdruck im Zyklon, so daß keine Luft von außen angesaugt werden kann, wenn bei kalter Abgasleitung noch nicht ausreichend Wasserdampf verfügbar ist. Damit durch den Unterdruck nicht Wasser unmittelbar aus dem Tank (1) angesogen wird, enthält die Dosierpumpe (2) eine Ansaugsperre (21) im Wasserweg. An dem Pumpstößel ist eine Ventilplatte angebracht, die bei unbetätigtem Steuermagneten schließt. Die Aufrechterhaltung des Unterdrucks bei geschlossener Drosselklappe ist unter Umständen für den Betrieb von Servoeinrichtung erforderlich. Hierfür ist in dem ersten Luftwegabschnitt (50a) zu den stromauf der Drosselklappe (63) mündenden Düsen (61) ein Ventil (6) angeordnet das verhindert, daß bei geschlossener Drosselklappe (63) über das Luftfilter (65) kommende Luft in die Düsen (61) eintritt und via den parallelen zweiten Leitungsabschnitt (50b) durch die Düsen (62) in den Ansaugstutzen (7) gelangen kann. Somit wird durch die Düsen (61, 62) stets nur Wasserdampf zugeführt.

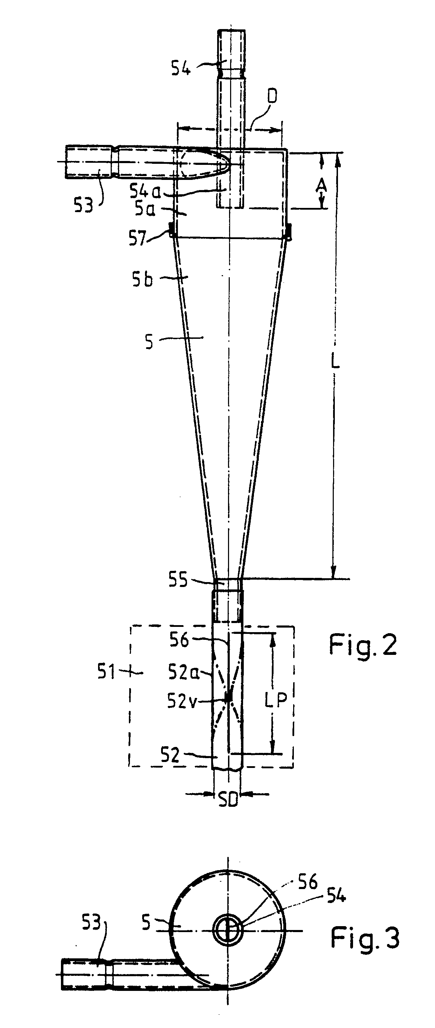

Die Einzelheiten des Zyklons (5) sind aus den Fig. 2 und 3 zu ersehen. Die Dampfleitung, die vom Verdampfer kommt, ist an dem Schlauchstutzen (53) mit einer Schelle befestigt. Der Stutzen (53) führt am oberen weiten Ende des Zyklons tangential in den Wirbelraum, der im Verhältnis seines Durchmesser (D) zu seiner Länge (L) von etwa 1/4 nach unten konisch verjüngt verläuft. In einem Abstand (A), der etwas geringer als der Durchmesser (D) des Zykons ist, mündet zentrisch von oben in dem Wirbelraum mit einem Ansatz (54a) der Dampfauslaßstutzen (54), der ebenfalls zweckmäßig ein Schlauchstutzen ist. Die Dampfleitung (50), die daran angeschlossen ist, hat zweckmäßig eine geringe Länge von wenigen Dezimetern, daß der Dampf dort nicht kondensiert. Da das Material des Schlauches Kunststoff oder Gummi ist, findet dort nur eine geringfügige Abkühlung statt.

An unteren engen Enden des Zyklons (5) ist an einem Schlauchstutzen (55) der Entsorgungsschlauch (52) angeschlossen, der vorteilhaft in einem Abschnitt (52a) das Unterdruck-Ventil (51) bildet, da in den elastischen Schlauch (52) ein längliches Plättchen (56) eingesetzt ist, dessen Breite etwas, z.B. 20 Prozent, größer als der Schlauchdurchmesser (50) ist und dessen Längen (LP) ein Mehrfaches, z.B. das 5-fache, des Schlauchdurchmessers (SD) beträgt, wodurch der Schlauch (52) sich bei Unterdruck der strichpunktierten Gestalt (52v) gemäß verformt und verschließt. Es handelt sich somit um eine sehr einfache und preiswerte Ventilausführung.

In dem Verdampfer scheidet sich wegen des schnellen Durchsatzes und der häufigen Temperaturveränderungen kein Kesselstein ab; sondern dieser wird mit dem Dampf in Form kleiner Partikel und ggf. zusammen mit Wassertröpfchen mitgerissen und im Zyklon in den Wandbereich geschleudert und dort ausgeschieden. Sobald bei anderen Lastbedingungen ein Dampfüberschuß anfällt, treibt dieser die Abscheidungen unten aus dem Zyklon duroh das geöffnete Ventil aus. Weil der Überschußdampf entweicht, ist eine extrem schnelle Umschaltung der Wasserdosierung bei Lastwechsel des Motors nicht erforderlich, und auch die Bildung eines gewissen Wasservorrates in dem Verdampfer, der zu einer Dampf-Erzeugung auch bei geschlossenem Dosierer führt, verursacht keinen gefährlichen Überdruck im Zyklon und den Leitungen.

Das Zyklon kann aus Glas hergestellt werden oder vorteilhaft aus Kunststoff, indem ein konischer Abschnitt (5a) und ein zylindrischer Abschnitt (5b) jeweils gespitzt wird, und diese dann zusammengesetzt werden. Hierzu ist ein Muffenansatz (57) an einem der Abschnitte angespritzt.

Das Ventil (6) Fig. 1 ist vorteilhaft ebenso wie das Auslaßventil (51) als Schlauchventil ausgestaltet. Statt in der Dampfleitung (50a) zu den stromauf der Drosselklappe (63) liegenden Düsen kann auch in der stromab liegenden Dampfleitung (50b) das Dampfventil (6b), das ebenfalls zweckmäßig als unterdruckgesteuertes Schlauchventil ausgebildet ist, angeordnet werden. Die Anordnung in der einen oder anderen Dampfleitung ist dafür entscheidend, wohin der Dampf geleitet wird, wenn nur eine beschränkte Menge Dampf angeliefert wird, also noch ein Unterdruck in der Leitung besteht. Eine besondere externe Steuerung ist für die Verteilung nicht erforderlich.

Eine vorteilhafte Ausgestaltung der Vorrichtung ist durch den Anschluß des Kurbelgehäuse-Entlüftungsschlauches (8) an die Dampfleitung (50b) gegeben, weil der heiße Dampf die Ölnebel aus dem Kurbelgehäuse zu einer besseren Verbrennung aufbereitet, wodurch sich der Schadstoffgehalt des Abgases gegenüber dem bei der üblichen Zuführung des Ölnebels in das Luftfilter vorliegenden Wert noch unter den bereits durch die Dampfzufuhr erbrachten niedrigen Wert verringert. Zweckmäßig ist der Anschluß (8) schräg in Strömungsrichtung des Dampfes gerichtet.

## Ansprüche

1. Vorrichtung zum Einführen von Wasserdampf in den Ansaugweg (7) einer Brennkraftmaschine, bei der Wasserdampf aus einem Verdampfer (4) über eine Dampfleitung (40, 50) in den Ansaugweg (7) geführt wird, dadurch gekennzeichnet, daß in der Dampfleitung (40, 50) ein Zyklon (5) angeordnet ist, dessen tangentialer Eingangsstutzen (53) mit dem Verdampfer (4) und dessen achsialer, obenseitiger Ausgangsstutzen (54) mit dem Ansaugweg (7) verbunden sind und an dem sich unten ein Entsorgungsstutzen (55) befindet, der über ein Unterdruckventil (51) an eine Entsorgungsleitung (52) angeschlossen ist.

2. Vorrichtung nach Anspruch 1, dadurch gekennzeichnet, daß der Ausgangsstutzen (54) mit einem Ansatz (54a) in den Innenraum des Zyklons (5) hineinragt und die Länge (A) des Ansatzes (54a) etwas kleiner als der größte Zyklondurchmesser (D) ist, und das Zyklon (5) nach unten konisch im Verhältnis von seinem größten Durchmesser (D) zu seiner Länge (L) von etwa 1/4 verjüngt ist.

3. Vorrichtung nach Anspruch 2, dadurch gekennzeichnet, daß das Zyklon (5) aus Glas einstükkig gefertigt ist oder aus einem oberen zylindrischen Abschnitt (5a) und einem unteren konischen Abschnitt (5b), die vorzugsweise aus Kunststoff gespritzt sind, zusammengesetzt ist.

4. Vorrichtung nach einem der vorstehenden Ansprüche, dadurch gekennzeichnet, daß die Dampfleitung (40, 50) und ggf. die Entsorgungsleitung (52) aus Kunststoff oder Gummischlauch bestehen.

5. Vorrichtung nach Anspruch 4, dadurch gekennzeichnet, daß das Unterdruckventil (51) ein Schlauchventil ist, das durch einen Schlauchabschnitt (51a) gebildet ist, in dem ein Plättchen (56) eingesetzt ist, dessen Breite etwa 20 Prozent größer als der Schlauchdurchmeeser (SD) ist und dessen Länge (LP) des Mehrfache, z.B. 5-fache, des Schlauchdurchmesser (SD) beträgt.

6. Vorrichtung nach einem der vorstehenden Ansprüche, dadurch gekennzeichnet, daß die Dampfleitung (50) abstromseitig des Zyklons (5) über einen ersten Dampfleitungsabschnitt (50a), ggf. über ein Dampfventil (6), das vorzugsweise ein Schlauchventil ist, zu einer ersten Düsenanordnung (61) stromauf einer Drosselklappe (63) und der Vergaserdüsen (64) im Luft-Ansaugweg (7) geführt ist und über einen zweiten parallelen Dampfleitungsabschnitt (50b) an eine zweite Düsenanordnung (62) stromab der Vergaserdüsen (64) in den Gemich-Ansaugweg (7) geführt ist.

7. Vorrichtung nach Anspruch 6, dadurch gekennzeichnet, daß in dem Dampfleitungsabschnitt (5b), der in den Düsen (62) stromab der Drosselklappe (63) mündet, ein Dampfventil (6b) angeordnet ist, das vorzugsweise ein unterdruckgesteuertes Schlauchventil ist.

8. Vorrichtung nach einem der vorstehenden Ansprüche, dadurch gekennzeichnet, daß der Verdampfer (4) eingangsseitig mit einer Wasserdosier- und Zuführeinrichtung verbunden ist, die aus einem Wassertank (1) besteht, an dem eine steuerbare Dosierpumpe (2) angeschlossen ist, deren Ausgangsleitung (20) über Wärmerücklaufsperrventile (3) zum Verdampfer (4) geführt ist und die eine Ansaugsperre (21) im Wasserweg enthält.

9. Vorrichtung nach einem der vorstehenden Ansprüche, dadurch gekennzeichnet, daß an die Dampfleitung (50, 50b) vor dem Ansaugweg (7), vorzugsweise in den Dampfleitungsabschnitt (50b), der stromab der Drosselklappe (63) in den Ansaugweg mündet, ein Kurbelgehäuse-Entlüftungsschlauch (8) angeschlossen ist, dessen Anschlußrichtung vorzugsweise in Strömungsrichtung des Dampfes schräg angewinkelt angeordnet ist.

**Claims**

1. Device for the introduction of steam into the suction intake channel (7) of an internal combustion engine, wherein the steam is conducted from a vaporizer (4) via a steam line (40, 50) into the suction intake channel (7), characterized in that within the steam line (40, 50) is arranged a cyclone (5) whose tangential input nozzle (53) is connected to the vaporizer (4) and whose axial, top outlet nozzle (54) is connected to the suction intake channel (7) and on which, underneath, is arranged a waste nozzle (55), which is connected to a waste pipe (52) via a negative pressure valve (51).

2. Device acccording to claim 1, characterized in that the outlet nozzle (54) has a neck (54a) projecting inwards into the cyclone (5) and the length (A) of the neck (54a) is somewhat smaller than the widest cyclone diameter (D), and the cyclone (5) in the relation of its widest diameter (D) to its length (L) is conically reduced in scale downwards by about 1/4.

3. Device according to claim 2, characterized in that the cyclone (5) is manufactured from glass as one piece or is composed of an upper cylindrical section (5a) and a lower conical section (5b), which are preferably plastic injection mouldings.

4. Device according to the foregoing claims, characterized in that the steam line (40, 50) and possibly the waste line (52) are made of plastic or rubber hosing.

5. Device according to claim 4, characterized in that the negative pressure valve (51) is a tube valve, which is formed by a hose section (51a), in which is inserted a small plate (56), whose width is about 20 per cent larger than the hose diameter (SD) and whose length (LP) is a multiple, e.g. 5-fold, of the hose deameter (SD).

6. Device according to one of the foregoing claims, characterized in that the steam line (50) is led on the discharge side of the cyclone (5) via a first section of steam line (50a), possibly via a steam valve (6), which is preferably a tube valve, to a first nozzle arrangement (61) upline of a butterfly valve (63) and of the vaporizer nozzles (64) in the air-intake channel (7) and via a second parallel section of steam line (50b) to a second nozzle arrangement (62) downline from the vaporizer nozzles (64) into the mixing inlet channel (7).

7. Device according to claim 6, characterized in that in the section of steam line (5b), which leads into the nozzles (62) downline from the butterfly valve (63) is fitted a steam blowthrough valve (6b), which is preferably a negative pressurecontrolled tube valve.

8. Device according to one of the foregoing claims, characterized in that the vaporizer (4) is connected on the inlet side with a water proportioning and feed device, which consists of a water tank (1), to which is connected a controllable proportioning pump (2), whose outlet pipe (20) is led via a heat non-return valve (3) to the vaporizer (4) and which contains a suction interlock (21) in the water channel.

9. Device according to one of the foregoing claims, characterized in that connected to the steam line (50, 50b) in front of the suction channel (7), preferably in the section of steam line (50b), which opens into the suction channel downline of the butterfly valve (63), is a crankcase-vent pipe (8), the direction of whose connection is preferably arranged at an oblique angle in the direction of the steam flow.

**Revendications**

1. Dispositif d'admission de vapeur d'eau dans le système d'admission (7) d'un moteur , dans lequel la vapeur d'eau est conduite à partir d'un évaporateur (4) au système d'aspiration (7), par l'intermédiaire d'une conduite de vapeur (40, 50), caractérisé par le fait que, dans la conduite de vapeur (40, 50), un cyclone (5) est disposé, dont la tubulure d'entrée (53) tangentielle est reliée à l'évaporateur (4) et dont la tubulure de sortie (54) axiale, disposée en haut, est reliée au système d'aspiration (7), ce cyclone (5) étant équipé, en bas, d'une tubulure de purge (55), reliée à une conduite de purge (52) par l'intermédiaire d'un reniflard (51).

2. Dispositif selon revendication 1, caractérisé par le fait que la tubulure de sortie (54) fait saillie à l'intérieur du cyclone (5) avec un appendice (54a), dont la longueur (A) est un peu plus petite que le plus grand diamètre (D) du cyclone, et que le cyclone (5) s'amincit coniquement, vers le bas, d'environ 1/4 par rapport de son plus grand diamètre (D) à sa longueur (L).

3. Dispositif selon revendication 2, caractérisé par le fait que le cyclone (5) est exécuté en verre, d'une seule pièce ou composé d'une partie supérieure cylindrique (5a) et d'une partie inférieure conique (5b), de préférence coulées en matière plastique.

4. Dispositif selon l'une des revendications précédentes, caractérisé par le fait que la conduite de vapeur (40, 50) et, le cas échéant, la conduite de purge (52) consistent en tuyaux en matière plastique ou eu caoutchouc.

5. Dispositif selon revendication 4, caractérisé par le fait que le reniflard (51) consiste en une valve de gonflage, formée par une section de tuyau (51a), dans laquelle une plaquette (56) est montée, dont la largeur est d'environ 20 pour cent supérieure au diamètre du tuyau (SD) et dont la longueur (LP) est un multiple, par exemple le quintuple, du diamètre du tuyau (SD).

6. Dispositif selon l'une des revendications précédentes, caractérisé par le fait que la conduite de vapeur (50) s'étend, en aval du cyclone (5), en une première section de conduite de vapeur (50a), le cas échéant en une soupape à vapeur (6) consistant de préférence en un reniflard, jusqu'à un premier dispositif de tuyères (61), en amont d'un papillon (63) et des gicleurs d'alimentation (64), dans le système d'aspiration d'air (7), et, en une seconde section de conduite de vapeur (50b), à un second dispositif de tuyères (62), en aval des gicleurs d'alimentation (64) , dans le système d'aspiration de mélange (7).

7. Dispositif selon revendication 6, caractérisé par le fait qu'une soupape à vapeur (6b) est disposée dans la section de conduite de vapeur (5b), débouchant dans les tuyères (62), en aval du papillon (63), laquelle soupape à vapeur (6b) consiste de préférence en un reniflard commandé à dépression.

8. Dispositif selon l'une des revendications précédentes, caractérisé par le fait que l'évaporateur (4) est relié, côté entrée, à un dispositif de dosage d'eau et d'alimentation, composé d'un réservoir d'eau (1), auquel une pompe de dosage (2) dirigible est raccordée, dont la conduite de sortie (20) est menée à l'évaporateur (4) par l'intermédiaire de clapets anti-retour thermiques (3) et comprenant une obturation d'aspiration (21) dans la voie d'eau.

9. Dispositif selon l'une des revendications précédentes, caractérisé par le fait qu'un tuyau d'aération du carter-moteur (8) est raccordé à la conduite de vapeur (50, 50b), en amont du système d'aspiration (7), de préférence dans la section de conduite de vapeur (50b) aboutissant, en aval du papillon (63), dans le système d'aspiration, le sens de raccordement de ce tuyau d'aération (8) étant, de préférence, angulairement en biais, dans le sens d'écoulement de la vapeur.

Fig.1

Fig.2

Fig.3